# FASCICULE DE BREVET EUROPEEN

(11) **EP 1 376 720 B1**
(45) Date de publication et mention de la délivrance du brevet: **02.10.2013**
(21) Numéro de dépôt: 03291320.4
(22) Date de dépôt: 03.06.2003
(51) Int. Cl.: H01M 10/52, H01M 2/12, A62C 3/16

(54) **Batterie à sécurité améliorée**
Batterie mit verbesserter Sicherheit
Battery with improved safety

(30) Priorité: 20.06.2002 FR 0207630
(43) Date de publication de la demande: 02.01.2004
(73) Titulaire: SAFT, 93170 Bagnolet (FR)
(72) Inventeur: Gaignerot, Laurent, 33600 Pessac (FR); Rigobert, Gérard, 33370 Fargues St. Hilaire (FR); Jonac, Philippe, 33170 Gradignan (FR); Bodart, Vincent, 75014 Paris (FR); Liegeart, Jean-Louis, 91590 d'Huison-Longueville (FR)
(74) Mandataire: Hirsch & Associés

(56) Documents cités:
- DE-A- 3 503 014
- PATENT ABSTRACTS OF JAPAN vol. 017, no. 409 (C-1091), 30 juillet 1993 (1993-07-30) & JP 05 084318 A (NGK INSULATORS LTD), 6 avril 1993 (1993-04-06)

## Description

La présente invention se rapporte à une batterie de générateurs électrochimiques comportant un dispositif destiné à assurer sa sécurité. Ce dispositif entre en action lorsqu'il se produit une anomalie dans le fonctionnement d'un ou plusieurs des générateurs, susceptible de générer un dégagement de gaz inflammables. Elle s'applique plus particulièrement aux batteries de générateurs électrochimiques comprenant un électrolyte non aqueux, notamment des générateurs rechargeables au lithium du type lithium-ion dont certains composants sont inflammables.

Les générateurs électrochimiques peuvent être associés en batterie par un montage en série ou en parallèle. Ils sont fréquemment assemblés de manière à former des modules qui sont eux-mêmes ensuite montés en batterie. Les modules sont le plus souvent placés ensemble dans un conteneur fermé.

Une anomalie dans le fonctionnement de la batterie peut être causée par le dysfonctionnement de l'un des générateurs électrochimiques (court-circuit, ...) ou une perturbation extérieure (choc, élévation de la température, etc ...). Cette anomalie provoque l'échauffement du générateur électrochimique, et une augmentation de sa pression interne. Lorsque la pression devient trop important, il y a éjection brutale d'un volume important de fumée et de particules incandescentes. Le contact avec l'air ambiant provoque dans la majorité des cas d'importantes flammes. Le risque d'inflammation est particulièrement important dans le cas d'un générateur au lithium, qui contient notamment des solvants organiques facilement volatils. La proximité d'un nombre important de générateurs multiplie d'autant ce risque.

Des dispositifs de sécurité ont été proposés qui ont pour but d'éteindre un incendie à l'aide d'un agent d'extinction qui peut se présenter sous la forme d'un gaz, d'un liquide, d'une poudre, de granulés ou encore d'un mélange de ceux-ci, placé à l'intérieur même du générateur mais cette disposition a pour inconvénient d'augmenter le volume total de la batterie proportionnellement au nombre de générateurs qui la constitue. L'énergie volumique d'une telle batterie diminue et devient rapidement incompatible avec les exigences des utilisateurs.

Dans le cas particulier des batteries de piles sodium-soufre (Na-S), plusieurs documents décrivent un équipement anti-incendie permettant d'injecter un agent d'extinction en granulés à l'intérieur du conteneur d'une batterie grâce à une buse d'injection placée sur le conteneur. L'équipement anti-incendie est disposé à l'extérieur de la batterie. Il se compose notamment d'un réservoir, contenant les granulés d'agent d'extinction et un gaz inerte, et d'un appareil permettant de mettre sous pression le gaz contenu dans le réservoir. Le réservoir et l'appareil sont reliés entre eux et au conteneur par un ensemble de tuyaux et de vannes.

Le temps nécessaire à un tel équipement anti-incendie pour remplir son rôle est long car il nécessite notamment un délai pour la mise sous pression du réservoir à l'aide d'un dispositif d'alimentation en gaz. Afin de raccourcir ce délai, on a proposé de maintenir le réservoir sous pression en le reliant de manière permanente à une bouteille de gaz pressurisé (JP-5 084 318). Mais il se produit des fuites du gaz sous pression dans les vannes et les tuyauteries, et lorsque l'incendie se déclare, il n'y a plus suffisamment de gaz pour entraîner l'agent d'extinction. De plus lorsque le réservoir est maintenu sous pression, la poudre et les granulés d'agent d'extinction peuvent s'introduire dans les sièges des vannes et les brides de raccordement, ce qui provoque une augmentation des fuites.

Tous les dispositifs précédemment décrits ont en commun l'inconvénient de réagir seulement lorsque l'incendie s'est déclaré et ce déclenchement tardif ne permet pas d'assurer la sécurité de l'utilisateur. Notamment dans le cas d'une batterie de générateurs électrochimiques rechargeables au lithium, du fait de la présence de solvants organiques très volatils, une telle durée suffit à atteindre un niveau de risque inacceptable. En particulier cette batterie présente un risque élevé d'incendie dû aux produits générés par l'emballement de la réaction. Dans le cas d'une batterie utilisée dans un véhicule, les conséquences peuvent en être importantes : contamination du feu à d'autres véhicules ou au voisinage.

La présente invention a pour de proposer une batterie dont la sécurité en cas d'expulsion de produits, en particulier vis à vis du risque d'inflammation, est améliorée par apport à l'art antérieur.

L'objet de la présente invention est une batterie comportant au moins un générateur électrochimique comprenant un conteneur étanche muni d'un opercule susceptible de s'ouvrir en cas de surpression interne, et un dispositif de sécurité anti-incendie, caractérisé en ce que ledit dispositif de sécurité, destiné à éviter l'inflammation en présence d'air des produits expulsés hors du générateur, comprend en combinaison
- au moins un moyen collecteur des produits expulsés par ledit opercule pour les conduire vers l'extérieur de la batterie, et
- au moins un moyen de pulvérisation d'un agent sous forme fluide à l'intérieur dudit moyen collecteur, ledit agent permettant d'abaisser la température desdits produits et d'empêcher ou de stopper leur inflammation.

Le moyen collecteur peut être constitué par un espace fermé communiquant d'une part avec l'opercule et d'autre part avec l'extérieur de la batterie.

Selon une variante de réalisation, le moyen collecteur conduit les produits expulsés vers une chambre comprenant une sortie vers l'extérieur de la batterie. La batterie peut comporter plusieurs collecteurs débouchant dans une même chambre. Le moyen collecteur peut être commun à plusieurs modules comprenant chacun au moins un générateur électrochimique.

Le moyen de pulvérisation peut être relié à un moyen de stockage de l'agent. Ce moyen de stockage est de préférence un réservoir de fluide sous pression. Le fluide peut être un liquide comme de l'eau ou un gaz notamment un gaz inerte comme de l'azote ou de l'argon. Le fluide émit par le moyen de pulvérisation a pour fonction de brasser et refroidir suffisamment les produits collectés pour les rendre ininflammables lorsqu'ils se retrouveront en présence d'air.

Selon une autre forme d'exécution de l'invention, le dispositif de sécurité comporte en outre un détecteur d'anomalie. De préférence le détecteur d'anomalie actionne le moyen de pulvérisation par exemple par l'intermédiaire d'un moyen mécanique.

D'autres caractéristiques et avantages de la présente invention apparaîtront à la lecture de la description qui suit d'un mode de réalisation donné bien entendu à titre illustratif et non limitatif, et dans le dessin annexé sur lequel la figure unique est une vue en perspective d'une batterie selon l'invention, constituée de quatre modules de générateurs électrochimiques, associée à un dispositif selon l'invention.

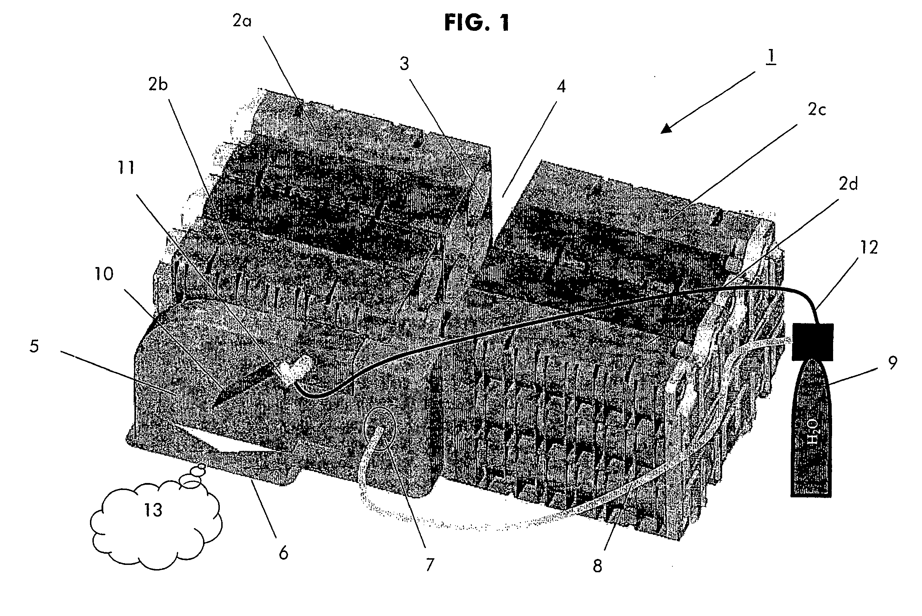

La batterie **1** représentée sur la figure **1** comprend quatre modules **2a** à **2d** constitués chacun de six générateurs électrochimiques **3** cylindriques. Chaque générateur **3** est muni d'un opercule de sécurité qui est destiné à s'ouvrir en cas de surpression interne afin de laisser s'échapper les produits de réaction. Un espace libre **4** est laissé entre les deux modules. Les modules sont disposés face à face de telle sorte que l'opercule de sécurité de chaque générateur débouche dans l'espace **4**. Les modules sont enfermés dans un conteneur étanche (non représenté) ce qui permet de collecter dans l'espace **4** formant un canal fermé, les produits de réaction expulsés à l'ouverture de l'opercule. Le canal **4** recueille les produits pour les conduire dans une chambre **5** comportant une sortie **6** vers l'extérieur. Un dispositif de pulvérisation **7**, tel qu'une buse, permet de pulvériser un fluide à l'intérieur du canal **4**. Ce dispositif de pulvérisation **7** est relié par un tuyau **8** à un réservoir de fluide sous pression **9** qui est ici une bouteille d'eau pressurisée. Sous l'effet de la pression des produits expulsés dans le canal **4**, un clapet **10** actionne un contacteur de détection d'événement **11**. La pulvérisation est déclenchée par le contacteur **11** qui est relié par un moyen de commande **12** au réservoir **9**. Les produits éjectés à l'extérieur de la chambre **5** sont refroidis et ne sont alors plus en état de s'enflammer spontanément au contact de l'air ambiant. On n'observe que des fumées **13**. Lors de l'arrêt de l'expulsion des gaz du générateur électrochimique **3**, le contacteur de détection d'événement **11** pourra commander la fermeture du réservoir **9** grâce au moyen de commande **12**. Ainsi, suivant le volume de fluide contenu dans le réservoir **9**, plusieurs évènements pourront être traités à des intervalles différents par le système de sécurité.

## Revendications

1. Batterie comportant au moins un générateur électrochimique comprenant un conteneur étanche muni d'un opercule susceptible de s'ouvrir en cas de surpression interne, et un dispositif de sécurité anti-incendie, **caractérisé en ce que** ledit dispositif de sécurité, destiné à éviter l'inflammation en présence d'air des produits expulsés hors du générateur, comprend en combinaison
- au moins un moyen collecteur des produits expulsés par ledit opercule pour les conduire vers l'extérieur de la batterie, et
- au moins un moyen de pulvérisation d'un agent sous forme fluide à l'intérieur dudit moyen collecteur, ledit agent permettant d'abaisser la température desdits produits et d'empêcher ou de stopper leur inflammation.

2. Batterie selon la revendication 1, dans laquelle ledit moyen collecteur est constitué par un espace fermé communiquant d'une part avec ledit opercule et d'autre part avec l'extérieur de ladite batterie.

3. Batterie selon l'une des revendications 1 et 2, dans laquelle ledit moyen collecteur conduit lesdits produits expulsés vers une chambre comprenant une sortie vers l'extérieur de ladite batterie.

4. Batterie selon l'une des revendications précédentes, dans laquelle ledit moyen de pulvérisation est relié à un moyen de stockage dudit agent.

5. Batterie selon la revendication 4, dans laquelle ledit moyen de stockage est un réservoir de fluide sous pression.

6. Batterie selon l'une des revendications précédentes, comportant en outre un détecteur d'anomalie.

7. Batterie selon la revendication 6, dans laquelle ledit détecteur d'anomalie actionne le moyen de pulvérisation.

## Patentansprüche

1. Batterie, umfassend mindestens einen elektrochemischen Generator, umfassend einen dichten Behälter, der mit einem Deckel versehen ist, der sich im Falle eines inneren Überdrucks öffnen kann, und eine Brandschutzsicherheitsvorrichtung, **dadurch gekennzeichnet, dass** die Sicherheitsvorrichtung, die dazu bestimmt ist, die Entzündung der aus dem Generator ausgestoßenen Produkte im Beisein von Luft zu vermeiden, in Kombination Folgendes umfasst:
- mindestens ein Mittel zum Sammeln der durch den Deckel ausgestoßenen Produkte, um sie in die äußere Umgebung der Batterie zu leiten, und
- mindestens ein Mittel zur Zerstäubung eines Wirkstoffes in fluider Form im Inneren des Sammelmittels, wobei es der Wirkstoff ermöglicht, die Temperatur der Produkte zu senken und ihre Entzündung zu verhindern oder zu stoppen.

2. Batterie nach Anspruch 1, bei der das Sammelmittel von einem geschlossenen Raum gebildet ist, der einerseits mit dem Deckel und andererseits mit der äußeren Umgebung der Batterie in Verbindung steht.

3. Batterie nach einem der Ansprüche 1 und 2, bei der das Sammelmittel die ausgestoßenen Produkte zu einer Kammer leitet, die einen Ausgang aus der Batterie nach außen umfasst.

4. Batterie nach einem der vorhergehenden Ansprüche, bei der das Zerstäubungsmittel mit einem Speichermittel des Wirkstoffes verbunden ist.

5. Batterie nach Anspruch 4, bei der das Speichermittel ein Druckfluidbehälter ist.

6. Batterie nach einem der vorhergehenden Ansprüche, ferner umfassend einen Fehlerdetektor.

7. Batterie nach Anspruch 6, bei der der Fehlerdetektor das Zerstäubungsmittel aktiviert.

## Claims

1. A battery comprising at least one electrochemical cell comprising a sealed container provided with a capsule suitable for opening in the event of excess internal pressure, and a fire-proofing safety device, the battery being **characterized in that** said safety device is intended for preventing reaction products expelled from the cell from igniting in the presence of air and it comprises in combination:
- at least one collector means for collecting the products expelled via said capsule so as to convey them out from the battery; and
- at least one spray means for spraying an agent in the form of a fluid inside said collector means, said agent enabling the temperature of said products to be lowered and preventing or quenching ignition thereof.

2. A battery according to claim 1, in which said collector means is constituted by a closed space communicating firstly with said capsule and secondly with the outside of said battery.

3. A battery according to one of claims 1 and 2, in which said collector means conveys said expelled products to a chamber having an outlet to the outside of said battery.

4. A battery according to one of the preceding claims, in which said spray means is connected to means for storing said agent.

5. A battery according to claim 4, in which said storage means is a tank of fluid under pressure.

6. A battery according to one of the preceding claims, further comprising an anomaly detector.

7. A battery according to claim 6, in which said anomaly detector actuates the spray means.
